# FASCICULE DE BREVET EUROPEEN

(11) **EP 2 366 114 B1**
(45) Date de publication et mention de la délivrance du brevet: **26.12.2012**
(21) Numéro de dépôt: 09756481.9
(22) Date de dépôt: 18.11.2009
(51) Int. Cl.: G06T 17/05, G01S 5/00, G01S 13/76, G01S 13/78

(54) **PROCÉDÉ DE TRANSMISSION D'UNE COORDONNÉE GÉOGRAPHIQUE**
VERFAHREN ZUM ÜBERTRAGEN EINER GEOGRAFISCHEN KOORDINATE
METHOD OF TRANSMITTING A GEOGRAPHICAL COORDINATE

(30) Priorité: 25.11.2008 FR 0806612
(43) Date de publication de la demande: 21.09.2011
(73) Titulaire: THALES, 92200 Neuilly-sur-Seine (FR)
(72) Inventeur: COLLE, Julien, F-92526 Neuilly-Sur-Seine Cedex (FR); DE LARMINAT, Eric, F-92526 Neuilly-Sur-Seine Cedex (FR)
(74) Mandataire: Lucas, Laurent Jacques
(86) Numéro de dépôt international: PCT/EP2009/065425
(87) Numéro de publication internationale: WO 2010/060847

(56) Documents cités:
- WO-A1-00/28347
- WO-A1-02/097762
- HICOK D S ET AL: "Application of ADS-B for airport surface surveillance" DIGITAL AVIONICS SYSTEMS CONFERENCE, 1998. PROCEEDINGS., 17TH DASC. THE AIAA/IEEE/SAE BELLEVUE, WA, USA 31 OCT.-7 NOV. 1998, NEW YORK, NY, USA,IEEE, US, vol. 2, 31 octobre 1998 (1998-10-31), pages F34/1-F34/8, XP010318131 ISBN: 978-0-7803-5086-1
- LARRY KENNEY ET AL: "Secure ATC surveillance for military applications" MILITARY COMMUNICATIONS CONFERENCE, 2008. MILCOM 2008. IEEE, IEEE, PISCATAWAY, NJ, USA, 16 novembre 2008 (2008-11-16), pages 1-6, XP031408162 ISBN: 978-1-4244-2676-8

## Description

La présente invention concerne un procédé de transmission d'une coordonnée géographique d'un émetteur vers un récepteur. Elle s'applique notamment au domaine naval et au domaine aérien pour transmettre des coordonnées indépendamment les unes des autres entre un répondeur et un interrogateur distants.

Lorsque l'on souhaite à partir d'un récepteur, par exemple un navire équipé d'un transpondeur, déterminer approximativement la position d'un objet pourvu d'un répondeur, par exemple un aéronef, il est connu d'interroger le répondeur et d'analyser le temps nécessaire à la réception de la réponse fournie par ce dernier. En effet, le secteur angulaire dans lequel le répondeur se situe et la distance à laquelle il évolue peuvent être déterminés grâce à la connaissance, respectivement, de la couverture d'antenne du récepteur et de la durée écoulée entre l'émission de l'interrogation et la réception de la réponse émise par le répondeur.

Cependant, la précision obtenue par cette méthode est parfois insuffisante. Pour connaître plus précisément la position d'un objet, des équipements spécifiques peuvent être installés, à la fois au niveau du poste d'interrogation et de l'objet pourvu du répondeur, de manière à permettre à l'objet de transmettre ses coordonnées précises par communications radioélectriques, et ce dans un format autorisant une précision suffisante. Toutefois, cette solution nécessite l'emploi d'un matériel supplémentaire.

Il est également possible de détourner l'utilisation classique des codes d'identification émis par un répondeur pour transmettre, à la place d'un tel code, une coordonnée formatée à la manière d'un code d'identification. Néanmoins, certains formats d'identification sont fortement limités par la taille des messages à transmettre. A titre d'exemple, pour les répondeurs communiquant via le protocole SIF, acronyme anglo-saxon pour « Selective Identification Features » signifiant « dispositif sélectif d'identification », seuls 13 bits sont disponibles pour transmettre une donnée. Or, par exemple, pour obtenir une précision de l'ordre de 330m, 16 bits sont nécessaires pour transmettre une coordonnée de latitude et 17 bits sont nécessaires pour transmettre une coordonnée de longitude, la circonférence terrestre étant environ égale à 40000 km (40000/2¹⁷ < 330).

Un algorithme connu sous le nom de « Compact Position Reporting » ou CPR, permet de réduire le nombre de bits nécessaires à la transmission des coordonnées d'un objet. Cet algorithme est détaillé dans le document suivant : « SSR Improvements and collision avoidance systems panel working group 1, an algorithm for compact position reporting (CPR) », R.D Grappel, V. A. Orlando, SICASP/WG-1, WP/1-403, 26 avril 1994.

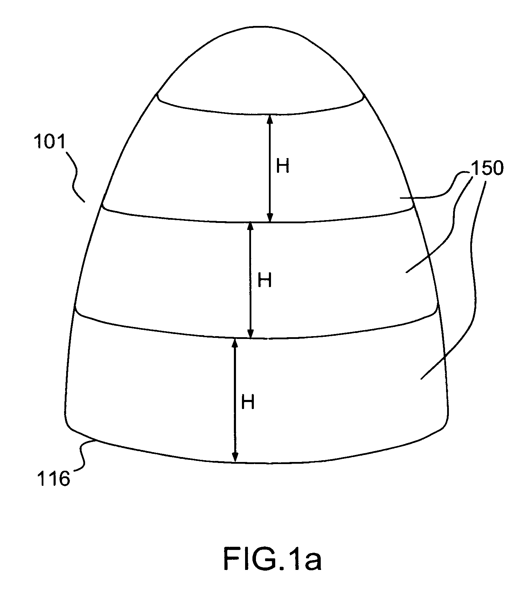

Comme l'illustre la figure 1a, un premier découpage est effectué par l'algorithme CPR pour diviser le sphéroïde terrestre 101 en bandes parallèles 150 à l'équateur 116, les bandes étant de même hauteur H. Ce premier découpage permet de réduire le nombre de bits nécessaires au codage de la latitude, laquelle est référencée localement par rapport à une desdites bandes 150. Connaissant la zone dans laquelle se situe le récepteur et à la limite de portée de ce récepteur, la latitude de l'émetteur peut être aisément décodée à partir du récepteur. Ainsi, pour reprendre l'exemple précité, si, en utilisant l'algorithme CPR, on divise l'hémisphère nord en 15 bandes de latitudes de 6° chacune, une précision de l'ordre de 330m peut être obtenue en codant la latitude sur 10 bits au lieu de 16 bits sans découpage, une bande de latitude faisant environ 670 km du nord au sud (670 km / 2¹⁰ < 330m).

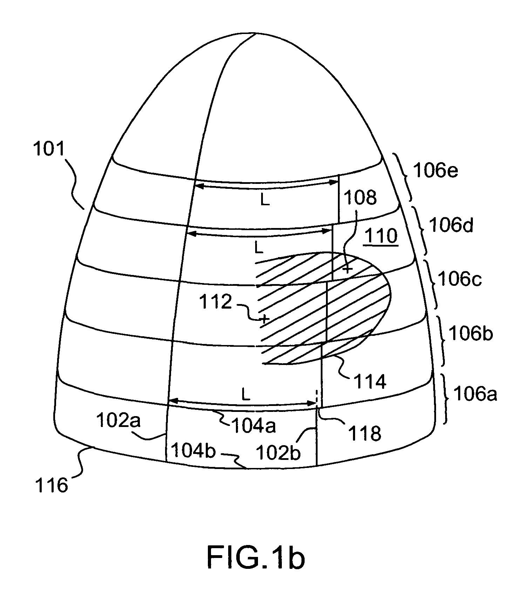

En outre, comme l'illustre la figure 1 b, un second découpage de l'algorithme CPR est effectué pour coder la longitude sur un nombre réduit de bits. Ce second découpage divise le sphéroïde terrestre 101 en cellules distinctes délimitées à l'est et à l'ouest par des méridiens 102a, 102b et au nord et au sud par des parallèles 104a, 104b, les cellules étant inscrites dans des tranches de latitude 106a, 106b, 106c, 106d, 106e. La longitude de l'objet 108 est alors référencée relativement à la cellule 110 dans laquelle se situe l'objet. Ainsi, pour reprendre l'exemple précité, en utilisant l'algorithme CPR pour créer des cellules de 360 milles nautiques de largeur, une précision de l'ordre de 330m peut être obtenue en codant la longitude sur 11 bits au lieu de 17 bits (360 x 1852 / 2¹¹< 330m, 1 mille nautique équivalant à 1852m). Par ailleurs, selon ce deuxième découpage CPR, la largeur L de la frontière nord - pour l'hémisphère nord ou la frontière sud pour l'hémisphère sud - d'une cellule est invariante, si bien qu'en changeant de tranche de latitude, les largeurs angulaires des cellules varient. Autrement dit, le nombre de cellules présentes à une latitude donnée diminue à mesure que l'on s'éloigne de l'équateur 116 et les cellules sont décalées les unes par rapport aux autres d'une tranche de latitude 106a à une autre 106b. Ainsi, du fait de ces décalages 118 entre cellules de latitudes différentes, la longitude ne peut être décodée sans connaître la latitude de l'objet.

Une première solution consiste à émettre la longitude et la latitude dans un même message, de sorte que la longitude puisse toujours être décodée. Toutefois, le mode de transmission utilisé ne permet pas toujours de transmettre un total de 21 bits dans un message (10 bits+11 bits), comme illustré plus haut avec l'exemple d'un répondeur émettant des messages d'une taille de 13 bits.

Une seconde solution consiste à émettre la latitude dans un premier message, la longitude dans un second message, puis de décoder la longitude grâce à l'information de latitude préalablement reçue. Toutefois, compte tenu des échecs fréquents dans les transmissions, la probabilité d'obtenir successivement deux transmissions réussies est faible. Cette solution n'est donc pas satisfaisante.

On peut citer l'article de Daniel S. Hicok et al, « Application of ADS-B for airport surface surveillance », digital avionics systems conference, 1998, proceedings, 17th dasc., IEEE. Ce document est une étude du système ADS-B qui permet de diffuser périodiquement des données de navigation d'un aéronef, notamment sa position et sa vitesse via un transpondeur. Il n'évoque pas le problème de réduction de la taille du message à transmettre pour coder la longitude et la latitude, et ne suggère aucun procédé d'optimisation dans la transmission desdites coordonnées.

Un but de l'invention est, dans le cadre d'un système de géoréférencement à coordonnées sphériques dans lequel au moins une première coordonnée d'un émetteur - par exemple la longitude -, est codée par rapport à un repère local propre à une cellule englobant ledit émetteur, ladite cellule étant choisie parmi des cellules de largeurs angulaires variables, de transmettre vers un récepteur cette première coordonnée sans devoir transmettre une autre coordonnée - par exemple la latitude - pour pouvoir décoder la première, c'est-à-dire pour que le récepteur puisse replacer la première coordonnée de l'émetteur dans un référentiel global sans connaître une autre coordonnée de l'émetteur. A cet effet, l'invention a pour objet un procédé de transmission vers un récepteur d'une coordonnée λ d'un émetteur positionné dans un système à coordonnées sphériques λ, ϕ, la première coordonnée ϕ variant selon un premier axe, la seconde coordonnée λ variant selon un deuxième axe orthogonal au premier, au moins une portion d'un hémisphère du sphéroïde terrestre étant divisée en N tranches parallèles chacune délimitées par un ϕ minimal et un ϕ maximal, chaque tranche étant découpée en X cellules chacune délimitées par un λ minimal et un λ maximal, X variant en fonction de la tranche, le procédé étant caractérisé en ce qu'il comporte au moins les étapes suivantes :
- partitionner l'ensemble desdites tranches en M+1 classes, M tranches étant intercalées entre deux tranches de même classe ;
- transmettre, dans un même message, la coordonnée λ de l'émetteur référencée relativement à la cellule dans laquelle se situe l'émetteur et la classe de la tranche dans laquelle se situe l'émetteur ;
la portée du récepteur étant au plus égale à la largeur d'une cellule selon l'axe de variation de la coordonnée λ.

Ce procédé permet au récepteur de décoder la coordonnée λ, c'est à dire déterminer la coordonnée absolue λ dans un référentiel global, sans que l'émetteur ait besoin de transmettre la première coordonnée ϕ.

L'émetteur peut être un répondeur embarqué, le récepteur étant un transpondeur apte à interroger le répondeur. Le procédé permet alors de transmettre une coordonnée entre un répondeur et un transpondeur sans devoir ajouter d'équipement spécifique ou modifier le matériel existant.

Selon une mise en oeuvre du procédé de transmission selon l'invention, le message de transmission de λ entre l'interrogateur et le répondeur est formaté selon le format Mark X comprenant 13 impulsions, l'identifiant de la tranche étant codé sur b bits, la longitude étant codée sur 13 - b bits. La précision de codage obtenue est alors égale au quotient de la largeur d'une cellule par 2^{(13-b)}.

Selon une mise en oeuvre du procédé de transmission selon l'invention, la division du sphéroïde terrestre est effectuée selon l'algorithme « Compact Position Reporting », l'axe des ϕ étant confondu avec l'axe des latitudes, ϕ variant dans une plage de 180°, l'axe des λ étant confondu avec l'axe des longitudes, λ variant dans une plage de 360°. La réutilisation d'un découpage connu et déjà implanté dans certains équipements permet ainsi de minimiser les interventions nécessaires à la mise en oeuvre du procédé sur les équipements existants.

Selon une mise en oeuvre du procédé de transmission selon l'invention, les tranches de latitudes sont réparties en trois classes C1 , C2, C3, l'identifiant de la classe de tranche de latitude étant alors codé sur 2 bits. Si la coordonnée λ est transmise dans un message de 13 bits, alors la précision de codage obtenue est alors égale au quotient de la largeur d'une cellule par 2⁽¹³⁻²⁾.

Selon une mise en oeuvre du procédé de transmission selon l'invention, la partition de l'ensemble des tranches de latitude en M+1 classes est effectuée en attribuant à chaque tranche un identifiant entier compris entre 0 et M avec M<N, l'identifiant de la i^{ème} tranche étant égal à i modulo (M+1).

L'invention a également pour objet un répondeur IFF, sigle anglo-saxon pour « Identification Friend or Foe » signifiant « identification ami ou ennemi », le répondeur IFF étant embarqué et mettant en oeuvre un procédé de transmission d'une coordonnée tel que décrit plus haut.

D'autres caractéristiques apparaîtront à la lecture de la description détaillée donnée à titre d'exemple et non limitative qui suit faite en regard de dessins annexés qui représentent :
- les figure 1a et 1 b, une illustration des découpages du sphéroïde terrestre en cellules selon l'algorithme CPR de l'art antérieur, ces figures ayant déjà été décrites plus haut,
- la figure 2, un synoptique présentant les étapes du procédé de transmission selon l'invention,
- la figure 3a, une représentation en projection azimutale d'une portion d'un hémisphère du sphéroïde terrestre partitionné par le procédé selon l'invention,
- la figure 3b, une représentation en projection cylindrique d'une portion d'un hémisphère du sphéroïde terrestre partitionné par le procédé selon l'invention,
- la figure 4, un exemple d'utilisation du procédé de transmission d'une coordonnée selon l'invention.

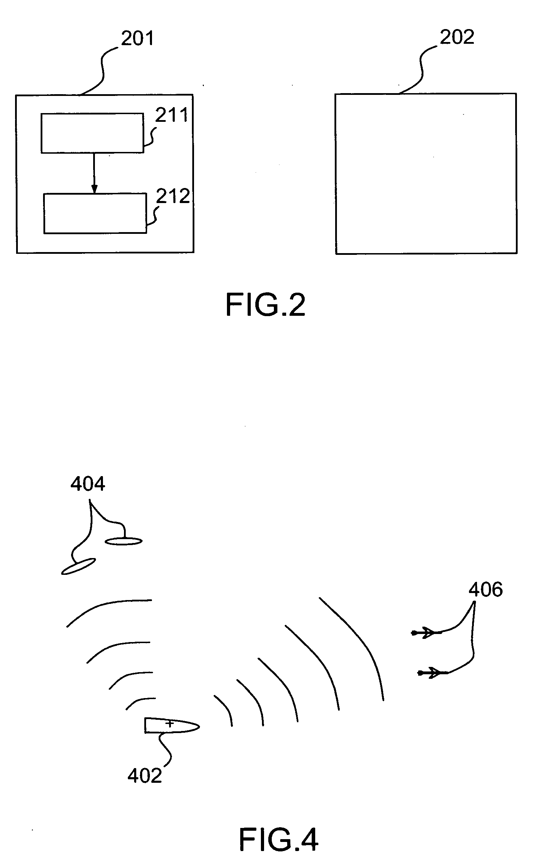

La figure 2, à travers un synoptique, présente les étapes d'un mode de mise en oeuvre du procédé selon l'invention qui est mis en oeuvre par un émetteur et un récepteur.

Le procédé selon l'invention comprend une première phase 201 préparatoire au cours de laquelle un système de coordonnées est construit, ce système de coordonnées devant être géré au niveau de l'émetteur et du récepteur. Ensuite, au cours d'une seconde phase 202 le système de coordonnées construit lors de la première phase 201 est exploité pour transmettre une coordonnée de l'émetteur vers le récepteur.

La première phase 201 comporte une première étape 211 de découpage du sphéroïde terrestre en cellules. Ce découpage est, par exemple, le second découpage de l'algorithme CPR présenté plus haut. Dans l'exemple, X cellules de dimensions identiques sont créées au niveau de l'équateur dans l'hémisphère nord - respectivement sud -, la largeur L de la frontière nord - respectivement sud - de chaque cellule étant la même pour toutes les cellules. La taille L des cellules est choisie, notamment en fonction de la portée de l'antenne du récepteur, de la précision souhaitée dans le codage des coordonnées ou de la capacité de stockage d'information d'un message transmis entre l'émetteur et le récepteur. Par exemple, L est égal à 360 milles nautiques. Ensuite, plusieurs autres tranches comprenant des cellules sont créées entre le pôle nord - respectivement sud - du sphéroïde et la tranche comprenant des cellules accolées à l'équateur, les largeurs des frontières nord de toutes les cellules étant égales à L. La largeur L des cellules demeurant constante à mesure que l'on s'éloigne de l'équateur tandis que le périmètre hémisphérique diminue, le nombre de cellules est également réduit en proportion, introduisant alors des décalages en longitude entre des cellules de latitudes différentes. Du fait de ces décalages, une valeur de longitude locale ne peut être traduite sans ambiguïté dans un référentiel global.

Lors d'une seconde étape 212, les tranches de latitude 106a, 106b, 106c, 106d, 106e sont réparties en M+1 classes. L'affectation des classes aux tranches de latitudes est effectuée de sorte que M tranches de latitudes sont intercalées entre deux tranches de latitudes appartenant à la même classe. L'entrelacement de tranches ainsi produit permet de s'assurer que deux tranches de latitude appartenant à la même classe sont toujours séparées par une distance égale à la somme des largeurs des tranches intercalaires. Dans l'exemple, M est égal à deux ; autrement dit, les tranches de latitudes sont réparties en trois classes C1, C2 et C3.

Avec le découpage ainsi effectué, un émetteur peut, d'une part, être référencé par une latitude et une longitude locales, c'est-à-dire définies relativement à la cellule dans laquelle l'émetteur est situé, et d'autre part, être affecté d'une classe correspondant à la tranche de latitude dans laquelle il est situé.

Lors de la seconde phase 202 du procédé selon l'invention le couple émetteur-récepteur exploite le système de coordonnées précédemment établi.

L'émetteur construit un message de transmission d'une coordonnée qu'il transmet au récepteur, le message regroupant la longitude locale de l'émetteur - c'est à dire référencée par rapport à la cellule dans laquelle l'émetteur est situé - et la classe de latitude dans laquelle l'émetteur est situé. Le codage de la classe est, par exemple, effectué comme suit : la i^{ème} tranche de latitude est affectée de l'identifiant i modulo (M+1). Dans l'exemple, comme les tranches sont réparties en trois classes C1, C2, C3, l'identifiant varie donc entre zéro et deux. Dès lors, un codage sur 2 bits peut être effectué pour représenter la classe de la tranche de latitude.

A titre d'illustration, si l'émetteur est un répondeur IFF émettant des messages au format Mark X à 13 impulsions, cela signifie que 13 bits au plus peuvent être transmis au sein d'un même message. Deux bits du message étant utilisés pour coder la classe de latitude, 11 bits peuvent alors être utilisés pour coder la longitude. Si, en outre, un découpage en cellules de 360 milles nautiques de largeur L est effectué, le procédé selon l'invention permet de transmettre, dans un seul message, une longitude avec une précision approximativement égale à 360 x 1852m / 2¹¹, soit environ 330m.

La mise en oeuvre du procédé selon l'invention peut être effectuée en modifiant les modules logiciels exploitant le système de coordonnée, lesquels modules logiciels sont installés sur les plate-formes porteuses des répondeurs et interrogateurs.

Selon un autre mode de mise en oeuvre, le découpage du sphéroïde diffère du découpage CPR. Par exemple, les dimensions des cellules diffèrent de celles indiquées par l'algorithme CPR. Par ailleurs, un modèle ellipsoïdal peut également être employé à la place du modèle sphérique, les coordonnées de l'émetteur étant alors référencées par rapport à un ellipsoïde de révolution.

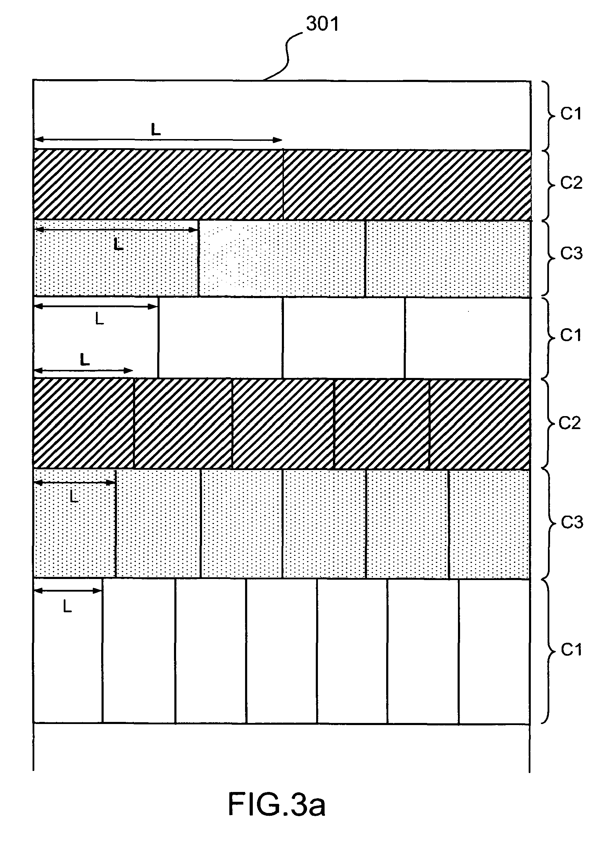

La figure 3a est une représentation en projection azimutale d'une portion d'un hémisphère du sphéroïde terrestre partitionné par le procédé selon l'invention. Dans l'exemple, les tranches de latitude sont partitionnées en trois classes C1, C2, C3. Les cellules appartenant aux tranches de la classe C1 sont représentées en blanc, celles appartenant à la classe C2 sont représentées en hachuré, celles appartenant à la classe C3 sont représentées avec des points. Selon cette projection, les tranches de latitudes sont délimitées par des cercles concentriques de plus en plus distants les uns des autres à mesure que l'on s'éloigne du pôle 301 de l'hémisphère.

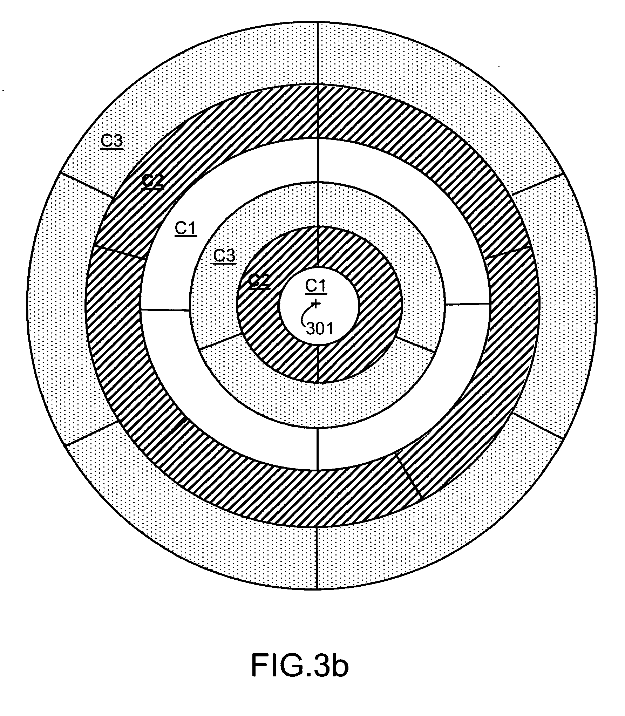

La figure 3b est une représentation en projection cylindrique d'une portion d'un hémisphère du sphéroïde terrestre partitionné par le procédé selon l'invention. La partition est, dans l'exemple, la même que celle présentée en figure 3a.

La figure 4 illustre un exemple d'utilisation du procédé de transmission d'une coordonnée selon l'invention.

Un navire 402 équipé d'un interrogateur mettant en oeuvre le procédé selon l'invention est chargé de localiser et de suivre les embarcations 404 et aéronefs 406 environnants, lesquels sont pourvus de répondeurs IFF mettant également en oeuvre le procédé selon l'invention.

Lors d'une première phase de balayage d'antenne, l'interrogateur du navire 402 émet N₁ messages d'interrogation pour demander la latitude aux éléments environnants (embarcations 404 et aéronefs 406). Chacun des répondeurs embarqués sur ces éléments 404, 406 reçoit ou non, selon son éloignement géographique, la qualité de propagation des messages dans le medium de transmission et des obstacles éventuels, un ou plusieurs messages d'interrogation. Le nombre N₁ de messages émis peut par exemple être ajusté en fonction des conditions de propagation radioélectriques, de manière à maximiser la probabilité d'atteindre les antennes réceptrices des répondeurs. En réponse aux messages d'interrogation, les messages au format Mark X incluant la latitude du porteur sont alors émis par les répondeurs des éléments 404, 406 ayant reçus au moins un message d'interrogation. La latitude de chaque message de réponse est référencée par rapport à une bande de latitude dans laquelle se situe le répondeur ayant émis le message de réponse. Comme expliqué plus haut, cette valeur de latitude locale correspond sans ambiguïté à une valeur de latitude dans le référentiel terrestre global, grâce à la limite de portée de l'antenne de l'interrogateur. L'interrogateur du navire 402 reçoit alors les messages de réponse issus des répondeurs pour mettre à jour les latitudes des éléments 404, 406 localisés.

Dans un second temps, l'interrogateur du navire 402 émet, via une autre série de balayages d'antenne, N₂ messages d'interrogation pour demander la longitude aux éléments environnants 404, 406. Des messages de réponse au format Mark X sur 13 bits, sont alors émis par les répondeurs, chacun desdits messages de réponse comprenant, dans l'exemple, 11 bits pour coder la longitude et 2 bits de codage pour spécifier la classe de latitude dans laquelle se situe le répondeur. A la réception du message de réponse, l'interrogateur identifie d'abord, grâce à la position approximative estimé du répondeur et à la classe de latitude dans laquelle il est situé, la tranche de latitude dans laquelle se situe le répondeur, ce qui lui permet de décoder la longitude. Un seul message est donc nécessaire pour transmettre la longitude à l'interrogateur. Ainsi, dans l'exemple, l'interrogateur n'utilise pas la latitude transmise lors de la première phase de balayage antenne, cette information étant potentiellement obsolète.

Le procédé selon l'invention peut permettre la transmission d'une coordonnée dans un système de coordonnées géographiques dont les axes ne sont pas confondus avec ceux du traditionnel système latitude-longitude. Par exemple, les axes peuvent être inclinés par rapport à l'axe nord-sud.

Outre le fait que le procédé selon l'invention permet de coder la position d'un émetteur avec un nombre de bits réduit pour une précision de codage équivalente, un avantage de ce procédé est que sa mise en oeuvre sur un répondeur ne nécessite aucune intervention matérielle lourde. Seule une modification logicielle au niveau du répondeur et de l'interrogateur manipulant les coordonnées est nécessaire afin d'y intégrer la partition des zones de latitudes en plusieurs classes, et ainsi garantir la cohérence des systèmes de coordonnées utilisés entre répondeur et interrogateur.

## Revendications

1. Procédé de transmission vers un récepteur d'une coordonnée λ d'un émetteur positionné dans un système à coordonnées sphériques λ, ϕ, au moins une portion d'un hémisphère du sphéroïde terrestre étant divisée en N tranches parallèles chacune délimitées par un ϕ minimal et un ϕ maximal, chaque tranche étant découpée en X cellules chacune délimitées par un λ minimal et un λ maximal, X variant en fonction de la tranche, le procédé étant **caractérisé en ce qu'**il comporte au moins les étapes suivantes :
- partitionner (212) l'ensemble desdites tranches en M+1 classes, M tranches étant intercalées entre deux tranches de même classe ;
- transmettre (202) dans un même message, la coordonnée λ de l'émetteur référencée relativement à la cellule dans laquelle se situe l'émetteur et la classe de la tranche dans laquelle se situe l'émetteur, la portée du récepteur étant au plus égale à la largeur d'une cellule selon l'axe de variation de la coordonnée λ.

2. Procédé de transmission selon la revendication 1, **caractérisé en ce que** l'émetteur est un répondeur embarqué, le récepteur étant un transpondeur apte à interroger le répondeur.

3. Procédé de transmission selon la revendication 2, **caractérisé en ce que** le message de transmission de λ entre l'interrogateur et le répondeur est formaté selon le format Mark X comprenant 13 impulsions, l'identifiant de la tranche étant codé sur b bits, la longitude étant codée sur 13 - b bits.

4. Procédé de transmission selon l'une quelconque des revendications précédentes, **caractérisé en ce que** la division du sphéroïde terrestre est effectuée selon l'algorithme « Compact Position Reporting », l'axe des ϕ étant confondu avec l'axe des latitudes, ϕ variant dans une plage de 180°, l'axe des λ étant confondu avec l'axe des longitudes, λ variant dans une plage de 360°.

5. Procédé de transmission selon la revendication 3 et 4, **caractérisé en ce que** les tranches de latitudes sont réparties en trois classes C1, C2, C3, l'identifiant de la classe de tranche de latitude étant alors codé sur 2 bits.

6. Procédé de transmission selon l'une quelconque des revendications précédentes, **caractérisé en ce que** la partition de l'ensemble des tranches de latitude en M+1 classes est effectuée en attribuant à chaque tranche un identifiant entier compris entre 0 et M avec M<N, l'identifiant de la i^{ème} tranche étant égal à i modulo (M+1).

7. Répondeur IFF embarqué, **caractérisé en ce qu'**il met en oeuvre un procédé de transmission d'une coordonnée selon l'une des revendications précédentes.

## Claims

1. A method for transmitting a coordinates λ to a receiver from an emitter positioned in a spherical coordinates system λ, ϕ, at least one portion of a hemisphere of the sphere of the earth being divided into N parallel sections each delimited by a minimum ϕ and a maximum ϕ, each section being divided into X cells each delimit by a minimum λ and a maximum λ, X varying as a function of the section, the method being **characterised in that** it comprises at least the following steps:partitioning (212) all of said sections into M+1 categories, M sections being disposed between two sections of the same category;
- transmitting (202), in the same message, the coordinate λ of the emitter, which is referenced relative to the cell in which the emitter is located and the category of the section in which the emitter is located, the range of the receiver being at most equal to the width of a cell along the axis of variation of the coordinate λ.

2. The transmission method according to claim 1, **characterised in that** the emitter is on-board responder, the receiver being a transponder that is designed to interrogate the responder.

3. The transmission method according to claim 2, **characterised in that** the transmission message of λ between the interrogator and the responder is formatted according to the Mark X format comprising 13 pulses, the section identifier being encoded on b bits, the longitude being encoded on 13 - b bits.

4. The transmission method according to any one of the preceding claims, **characterised in that** the division of the sphere of the earth is carried out according to the "Compact Position Reporting" algorithm, the axis of the ϕ coinciding with the axis of the latitudes, ϕ varying in a range of 180°, the axis of the λ coinciding with the axis of the longitudes, λ, varying in a range of 360°.

5. The transmission method according to claims 3 and 4, **characterised in that** the latitude sections are divided into three categories, C1, C2, C3, the identifier of the category of the latitude section then being encoded on 2 bits.

6. The transmission method according to any one of the preceding claims, **characterised in that** the partitioning of all of the latitude sections into M+1 categories is carried out by assigning an integer identifier to each section that is between 0 and M with M<N, the identifier of the i^{th} section being equal to i modulo (M+1).

7. An on-board IFF responder, **characterised in that** it implements a method for transmitting a coordinate according to any one of the preceding claims.

## Patentansprüche

1. Verfahren zum Übertragen einer Koordinate λ zu einem Empfänger von einem Sender, der in einem sphärischen Koordinatensystem λ, ϕ positioniert ist, wobei wenigstens ein Teil einer Erdhalbkugel in N parallele Scheiben unterteilt ist, die jeweils durch ein minimales ϕ und ein maximales ϕ begrenzt werden, wobei jede Scheibe in X Zellen geschnitten ist, die durch ein minimales λ und ein maximales λ begrenzt werden, wobei X in Abhängigkeit von der Scheibe variiert, wobei das Verfahren **dadurch gekennzeichnet ist, dass** es wenigstens die folgenden Schritte beinhaltet:Unterteilen (212) der Gesamtheit der Scheiben in M+1 Klassen, wobei sich M Scheiben zwischen zwei Scheiben derselben Klasse befinden;
- Übertragen (202), in derselben Nachricht, der Koordinate λ des Senders, die relativ zu der Zelle referenziert ist, in der sich der Sender befindet, und der Klasse der Scheibe, in der sich der Sender befindet, wobei die Reichweite des Empfängers maximal gleich der Breite einer Zelle entlang der Variationsachse der Koordinate λ ist.

2. Übertragungsverfahren nach Anspruch 1, **dadurch gekennzeichnet, dass** der Sender ein an Bord befindlicher Responder ist, wobei der Empfänger ein Transponder ist, der so ausgelegt ist, dass er den Responder abfragt.

3. Übertragungsverfahren nach Anspruch 2, **dadurch gekennzeichnet, dass** die Übertragungsnachricht von λ zwischen dem Interrogator und dem Responder im Mark X Format formatiert wird, das 13 Impulse umfasst, wobei die Scheibenkennung auf b Bits codiert wird, wobei der Längengrad auf 13 - b Bits codiert wird.

4. Übertragungsverfahren nach einem der vorherigen Ansprüche, **dadurch gekennzeichnet, dass** die Unterteilung der Erdkugel gemäß dem Algorithmus "Compact Position Reporting" erfolgt, wobei die Achse von ϕ mit der Breitenachse zusammenfällt, wobei ϕ in einem Bereich von 180° variiert, wobei die Ache von λ mit der Längenachse zusammenfällt, wobei λ in einem Bereich von 360° variiert.

5. Übertragungsverfahren nach den Ansprüchen 3 und 4, **dadurch gekennzeichnet, dass** die Breitenscheiben in drei Klassen C1, C2, C3 unterteilt sind, wobei die Kennung der Breitenscheibenklasse dann auf 2 Bits codiert wird.

6. Übertragungsverfahren nach einem der vorherigen Ansprüche, **dadurch gekennzeichnet, dass** die Unterteilung der Gesamtheit der Breitenscheiben in M+1 Klassen durch Zuordnen einer ganzzahligen Kennung zwischen 0 und M mit M<N zu jeder Scheibe erfolgt, wobei die Kennung der i-ten Scheibe i modulo (M+1) ist.

7. An Bord befindlicher IFF-Responder, **dadurch gekennzeichnet, dass** er ein Verfahren zum Übertragen einer Koordinate nach einem der vorherigen Ansprüche ausführt.
